# EUROPÄISCHE PATENTSCHRIFT

(11) **EP 2 496 330 B1**
(45) Veröffentlichungstag und Bekanntmachung des Hinweises auf die Patenterteilung: **14.10.2015**
(21) Anmeldenummer: 10779286.3
(22) Anmeldetag: 05.11.2010
(51) Int. Cl.: B01D 29/11, B01D 46/24, B01D 46/52

(54) **VERFAHREN ZUM HERSTELLEN EINES FILTERELEMENTS**
METHOD FOR PRODUCING A FILTER ELEMENT
PROCÉDÉ DE PRODUCTION D'UN ÉLÉMENT FILTRANT

(30) Priorität: 05.11.2009 DE 102009052123
(43) Veröffentlichungstag der Anmeldung: 12.09.2012
(73) Patentinhaber: MANN+HUMMEL GmbH, 71638 Ludwigsburg (DE)
(72) Erfinder: GEHWOLF, Klaus, 94437 Mamming (DE); MAIER, Michael, 94419 Reisbach (DE)
(86) Internationale Anmeldenummer: PCT/EP2010/066880
(87) Internationale Veröffentlichungsnummer: WO 2011/054919

(56) Entgegenhaltungen:
- EP-A2- 1 249 261
- DE-A1- 19 933 163
- US-A- 4 184 966
- US-A- 4 735 720

## Beschreibung

### Technisches Gebiet

Die vorliegende Erfindung betrifft ein Verfahren zum Herstellen von Filterelementen,

Um z.B. im Automobilbereich Fluide, wie Kraftstoffe, Betriebsmittel oder Innenraumluft zu filtern, werden häufig gefaltete oder plissierte Filtervliesmaterialien eingesetzt. Dabei ist es oft notwendig, verschiedene Kanten oder Endabschnitte dieser flächigen Filtermaterialien miteinander zu verbinden. Bekannte Filterelemente werden z. B. aus zunächst zickzackförmig gefalteten Fütermaterialbögen, die zu einem rohrförmigen Körper geformt werden, gefertigt. Um den rohrförmigen Körper zu schließen, müssen dann Faltenendabschnitte fluiddicht miteinander verbunden werden.

### Stand der Technik

In der Vergangenheit wurden dabei z. B. Metallclips oder Klammern eingesetzt, die zwei aufeinanderliegende flächige Abschnitte aneinanderhalten. Es ist auch üblich, die beiden Filtermaterialbögen miteinander zu verkleben oder durch Schweißen miteinander zu verbinden. Insbesondere bei mehrlagigen Filtermedien, beispielsweise mehrere Schichten von dünnem Vliesmaterial, das imprägniert ist oder spezielle Zwischenschichten aufweist, ist es schwierig, ein Ausfransen an aneinanderliegenden Kanten zu verhindern. Eine besondere Schwierigkeit besteht darin, die zu verbindenden flächigen Medien fluiddicht miteinander zu verbinden, d.h. das zu filternde Fluid darf nicht an der Verbindungsstelle ungefiltert das Filtermaterial durchlaufen. Aus der US 4,735,720 ist zu entnehmen, dass die Endabschnitte eines Faltenbalgs in eine Gussform eingelegt werden. Dann wird flüssiger Kunststoff in die Form eingefüllt, um die Endabschnitte des Faltenbalgs miteinander zu verbinden.

Vor diesem Hintergrund liegt der vorliegenden Erfindung die Aufgabe zugrunde, ein verbessertes Verfahren zum Herstellen eines Filterelements, insbesondere mit verbundenen Endfaltenabschnitten von Filterbalgmedien, bereitzustellen.

### Offenbarung der Erfindung

Diese Aufgabe wird durch ein Verfahren gemäß Anspruch 1 gelöst.

Demgemäß weist ein nach dem Verfahren hergestelltes Filterelement miteinander fluiddicht verbundene gegenüberliegende Endabschnitte eines Filtermaterialbogens auf, wobei eine angespritzte und/oder anextrudierte Kunststoffummantelung die Endkanten der Endabschnitte umschließt.

Die angespritzte und/oder anextrudierte Kunststoffummantelung dichtet dabei die miteinander verbundenen Endabschnitte oder Endkanten ab. Vorzugsweise umschließt die Kunststoffummantelung die Endkanten über ihre gesamte Länge. Damit ergibt sich eine fluiddichte Verbindung zwischen aufeinandergelegten Endfaltenabschnitten, wenn das Filtermaterial zickzackförmig gefaltet ist, um einen Endlosfaltenbalg auszubilden.

Bei einer Variante des Filterelementes ist die Kunststoffummantelung mittels eines Spritzgussverfahrens um und/oder auf die Endkanten aufgetragen.

Bei einer Variante des Filterelementes ist die Kunststoffummantelung mittels eines Extrusionsverfahrens um und/oder auf die Endkanten aufgetragen.

Während üblicherweise extrudierte Heißkleber verwendet werden, die lediglich auf die Innenseiten, also zwischen den flächig aufeinanderliegenden Endabschnitten aufgetragen werden, umschließt die vorgeschlagene Kunststoffummantelung die zu verbindenden Abschnitte vollständig.

Als Filtermaterial kommen insbesondere Filtervliesmaterialien und/oder Filterpapier in Frage. Als Ausgangsmaterial werden in der Regel Bögen eines entsprechenden Filtervlieses oder Filterpapiers oder einer Kombination daraus geschnitten, gefaltet und anschließend die Endabschnitte miteinander verbunden. Es ergibt sich dann ein Endlosfaltenbalg, der weiterverarbeitet wird.

Ein nach dem Verfahren hergestelltes Filterelement weist dementsprechend ein flächiges Filtermaterial mit mindestens zwei Endabschnitten auf, wobei die beiden Endabschnitte miteinander fixiert und keine offenden Endkanten vorliegt, da die angespritzte und/oder anextrudierte Kunststoffummantelung beide Endkanten der Endabschnitte umschließt.

Das Filtermaterial kann dabei auch mehrere Lagen aufweisen, wobei z. B. zwischen den Lagen ein Absorbermaterial, wie Aktivkohlepartikel, eingefüllt ist. Beispielsweise sind Filtermedien im Einsatz, die zwischen zwei Lagen Aktivkohlepartikel aufweisen, welche Schmutz oder Geruchsstoffe absorbieren. Insbesondere bei mehrlagigen Filtermedien erreicht man durch die Kunststoffummantelung, dass die Lagen nicht ausfransen oder eingebrachte Partikel zwischen den Lagen aus dem Filterelement rieseln.

Es wird ferner eine Filtereinrichtung vorgeschlagen, die ein nach dem Verfahren hergestelltes Filterelement aufweist und als Betriebsmittelfilter, wie z. B. ein Kraftstofffilter, Ölfilter oder ein Luft- oder Innenraumfilter für ein Kraftfahrzeug ausgebildet sein kann.

Bei der Filtereinrichtung kann insbesondere das Filterelement zwischen einem oberen und einem unteren Deckel vorgesehen sein. Man spricht auch von Filterendscheiben, zwischen die ein zickzackförmiger Faltenbalg vorgesehen ist.

Insbesondere kann die Kunststoffummantelung dann dasselbe Material wie der obere und der untere Deckel bzw. die verwendeten Endscheiben haben. Da die Endscheiben gegenüber den zu filternden Medien, wie beispielsweise Benzin oder Schmierstoffen, beständig sein müssen, bietet sich für die Auswahl der Kunststoffummantelung dasselbe Material an. Somit ist es nicht notwendig andere, beispielsweise passende Klebstoffe, auszuwählen, die zudem die Entsorgung eines verschmutzten Filters schwierig machen können.

Bei dem erfindungsgemäßen Verfahren zum Herstellen eines Filterelementes erfolgt ein Umspritzen von gegenüberliegenden Endkanten von Endabschnitten eines Filtermaterialbogens mit einer Kunststoffummantelung zum Ausbilden eines Endlosbalgs oder eine Verbindung gegenüberliegender Endkanten in einem Extrusionsprozess.

Beispielsweise wird als Kunststoffmaterial ein thermoplastisches Material geschmolzen und in eine die Ummantelung definierende Form in einem Spritzgussverfahren eingespritzt. Optional umfasst das Verfahren, dass die Endabschnitte flächig aufeinandergelegt werden. Ferner kann der Filtermaterialbogen mehrfach zickzackförmig parallel zu den Endkanten gefaltet werden.

Vorzugsweise werden die Endkanten vollständig ihrer gesamten Länge umspritzt. Vor dem Umspritzen können die Endabschnitte gegeneinander gedrückt werden. Darüber hinaus kann das Gegeneinanderdrücken auch noch während des Umspritzens erfolgen.

Bei einer Variante des Verfahrens erfolgt das Gegeneinanderdrücken durch ein Spritzgusswerkzeug. Es können Presskanten in das Spritzgusswerkzeug integriert werden, die einerseits die aufeinanderliegenden Filtermaterialflächen fixieren und andererseits einen Hohlraum für den einzuspritzenden Kunststoff bilden. Diese Presskanten können in beliebigem Abstand von den Endkanten der Endabschnitte eingestellt werden, so dass der Bereich der Endabschnitte und Endkanten, die mit dem Kunststoff ummantelt werden sollen, leicht verstellbar ist.

Weitere mögliche Implementierungen der Erfindung umfassen auch nicht explizit genannte Kombinationen von zuvor oder im Folgenden bezüglich der Ausführungsbeispiele beschriebenen Merkmale, Verfahrensschritte oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1 eine perspektivische Darstellung eines ersten Ausführungsbeispiels für ein Filterelement;
Fig. 2 eine perspektivische Darstellung eines zweiten Ausführungsbeispiels für ein Filterelement;
Fig. 3 eine Querschnittsdarstellungen des zweiten Ausführungsbeispiels für ein Filterelement;
Fig. 4 eine schematische Darstellung eines Ausführungsbeispiels für eine Filtereinrichtung;
Fig. 5 Darstellungen zur Erläuterung von Varianten eines Herstellungsverfahrens für Filterelemente;
Fig. 6 eine Querschnittsdarstellung eines alternativen Ausführungsbeispiels für ein Filterelement;
Fig. 7 eine Schnittdarstellung eines Ausführungsbeispiels einer Herstellungsanordnung für Filterelemente; und
Fig. 8 eine Schnittdarstellung eines Ausführungsbeispiels eines Extrusionsrohres zur Verwendung in der Herstellungsanordnung.

In den Figuren sind gleiche oder funktionsgleiche Elemente, sofern nichts anderes angegeben ist, mit denselben Bezugszeichen versehen worden. Ausführungsform(en) der Erfindung

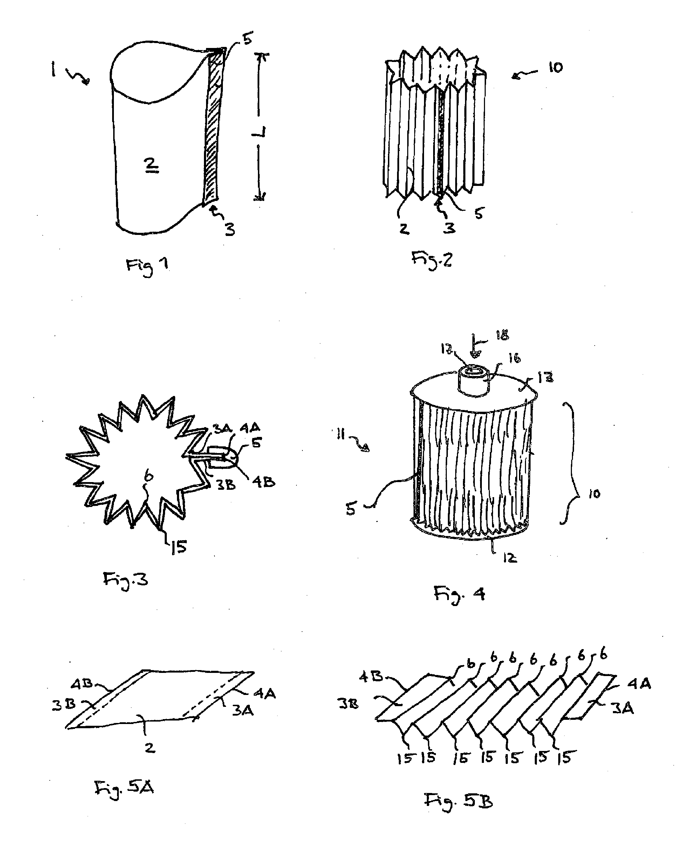

Fig. 1 zeigt ein erstes Ausführungsbeispiel für ein Filterelement. Dabei ist das Filterelement 1 aus einem Bogen eines flächigen Filtermediums, wie beispielweise einem Filtervliesmaterial gebildet. Zunächst sind dann rechteckige Filtervliesmaterialbögen so geformt, dass Endabschnitte des Bogens 3 aneinander schmiegen. In Fig. 1 ergibt sich somit ein Endlosfilterbalg 2, wobei die Endabschnitte 3 von einer Kunststoffummantelung 5 gehalten sind, welche z. B. in einem Spritzgussverfahren um die Endfalten bzw. Endkanten gespritzt wurde. Die Kunststoffummantelung 5 ist dabei schraffiert dargestellt. Das Filterelement 1 kann beispielweise in einer Filtereinrichtung in einen Filtertopf eingeführt werden, so dass das zu filternde Fluid, wie beispielweise Kraftstoff, Öl oder auch Luft durch das Filtermedium treten kann und dabei gereinigt wird.

Dabei umschließt die gespritzte Kunststoffummantelung 5 über die gesamte Länge L bzw. in der Darstellung der Fig. 1 über die gesamte Höhe, die jeweiligen beiden miteinander verbundenen Endabschnitte fluiddicht.

Fig. 2 zeigt eine perspektivische Darstellung eines zweiten Ausführungsbeispiels, wobei ein Filterelement 10 aus einem zickzackförmig gefalteten Filtervliesmaterial gebildet ist. Das zickzackförmige Filtermaterial wird zu einem Balg 2 geformt, indem Endabschnitte oder Endfaltenabschnitte 3 durch das gespritzte Kunststoffmaterial als Ummantelung 5 miteinander verbunden sind. Durch die zickzackförmige Faltung ergibt sich einen größere Oberfläche des Filtermaterials in dem Filterelement 10. Die Verbindung der Endabschnitte 3 des flächigen Filtermaterials ist in den folgenden Figuren genauer dargestellt.

In Fig. 3 ist ein Querschnitt der in Fig. 2 dargestellten Ausführungsform für ein Filterelement gezeigt. In einer Darstellung der Fig. 3 schaut man auf das Faltenprofil in der Orientierung der Fig. 2 von oben oder nach unten auf den Faltenbalg. Somit ergeben sich Faltungen 6 und 15 mit jeweils entgegengesetzter Orientierung. Die beiden Endfaltenabschnitte 3A, 3B werden durch die Kunststoffummantelung 5, die durch ein Kunststoffspritzgussverfahren erfolgt ist, miteinander verbunden und abgedichtet. Die Kunststoffummantelung 5 umschließt dabei vollständig die Endkanten 4A, 4B der Endfaltenabschnitte 3A, 3B. Aus dem Innenraum des Faltenbalgs kann durch die miteinander verbundenen Endabschnitte 3A, 3B kein Fluid entweichen.

Fig. 4 zeigt eine Filtereinrichtung 11, beispielsweise als Kraftstofffilter, die mit einem wie vor beschriebenen Filterelement 10 ausgeführt ist. Die Filtereinrichtung bzw. der Kraftstofffilter 13 umfasst ein aus zickzackförmigem Filtermaterial gebildeten Faltenbalg 2, der zwischen zwei Deckeln 12, 13 gehalten ist. Der Faltenbalg entspricht einem Filterelement 10, bei dem zwei Endabschnitte durch die gespritzte Kunststoffummantelung 5 miteinander fluiddicht verbunden sind.

Der obere Deckel 13 ist mit einem Anschluss 16 versehen, der eine Öffnung 17 aufweist. Zu filterndes Fluid kann beispielsweise in Pfeilrichtung 18 in den Innenraum des Faltenbalgs 10 eintreten und durch die Falten des Filtermaterials ausströmen. Selbstverständlich sind weitere Filtereinrichtungen denkbar. Beispielweise kann das Filterelement in einen Filtertopf eingeführt oder auch ein eckiger Balg gebildet werden. Man spricht bei den Deckeln 12, 13 auch von Endscheiben.

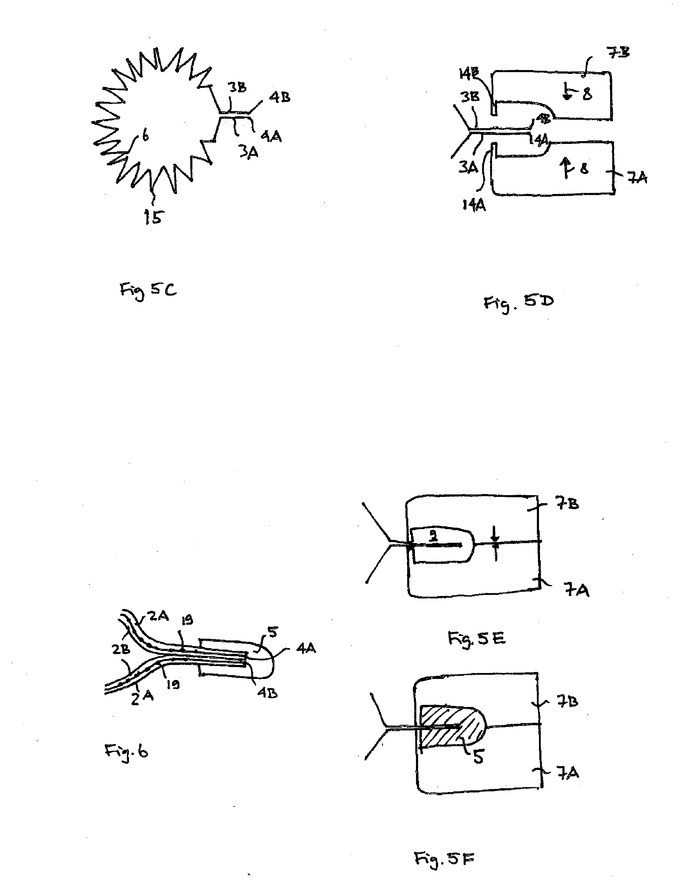

Die Darstellungen in Fig. 5 dienen der Erläuterung von Varianten des Herstellungsverfahrens für entsprechende Filterelemente. In einem ersten Schritt, wie in Fig. 5A dargestellt, wird ein flächiger Filtermaterialbogen 2 bereitgestellt. Der Filtermaterialbogen 2 ist beispielsweise rechteckig geformt. Es sollen somit die gegenüberliegenden Endabschnitte 3A, 3B miteinander verbunden werden, damit ein rohrförmiger Filterelementkörper ausgebildet wird. Dabei werden in der Folge insbesondere die Endkanten 4A, 4B aneinandergelegt. Um einen zickzackförmigen Faltenbalg, wie in Fig. 2 und 3 dargestellt, auszubilden, wird der Filtermaterialbogen zunächst plissiert bzw. gefaltet. Dies ist in Fig. 5B dargestellt. Es sind verschiedene Verfahren zum zickzackförmigen Falten von Filtermaterialien bekannt. Es können z. B. gegeneinander greifende Faltmesser eingesetzt werden, die Faltungen unterschiedlicher Orientierung 6, 15 in dem Filterbogen hervorrufen. Auch rotierende Messeranordnungen sind bekannt.

In Fig. 5B sieht man einen gefalteten Filtermaterialbogen, wobei die Endabschnitte 3A, 3B nunmehr Endfaltenabschnitten 3A, 3B entsprechen.

Fig. 5C zeigt eine Querschnittdarstellung, ähnlich der Fig. 3. Der zickzackförmige Filtermaterialbogen wird derart umgebogen, dass die beiden Endfaltenabschnitte 3A, 3B flächig aufeinanderliegen. Dabei bilden die Endkanten 4A, 4B eine gemeinsame Abschlusskante.

In einem Folgeschritt werden die Endfaltenabschnitte 3A, 3B aufeinandergedrückt. Dies kann beispielsweise über geeignete Presskanten 14A, 14B erfolgen. Fig. 5D zeigt schematisch im Querschnitt ein zweiteiliges Spritzgusswerkzeug 7A, 7B. Das Spritzgusswerkzeug kann beispielsweise in der Art einer Klammer mittels der Presskanten 14A, 14B die beiden Endabschnitte 3A, 3B aufeinander oder gegeneinander drücken. Durch ein Zusammenfahren in Pfeilrichtung 8 wird durch das Spritzgusswerkzeug 7A, 7B ein Hohlraum um die Endfaltenkanten 4A, 4B gebildet. Dies ist in Fig. 5E näher dargestellt. Die beiden Spritzgusswerkzeugteile 7A, 7B schließen dabei einen Hohlraum 9 ein. In diesem Hohlraum wird nun flüssiger Kunststoff unter Druck eingeführt.

Fig. 5F zeigt wie das erstarrte Kunststoffmaterials nach dem Spritzgießen noch innerhalb der Spritzgussform 7A, 7B vorliegt. Der erstarrte Kunststoff bildet somit die Kunststoffummantelung 5, was in Fig. 5F schraffiert dargestellt ist. Der Abstand der Presskanten 14A, 14B von den Endkanten 4A, 4B der Endabschnitte 3A, 3B kann an die jeweiligen Gegebenheiten angepasst werden. Muss die sich ergebende Balgnahtendlosverbindung entlang der Kanten 4A, 4B besonders robust sein, ist es möglich, den Abstand bzw. die vom Kunststoff umschlossene Fläche zu vergrößern.

Durch das vorgeschlagene Herstellungsverfahren wird über die gesamte Länge der Kanten eine zuverlässige fluiddichte Abdichtung erreicht. Insbesondere durch das Umschließen der Kanten wird ein Ausfransen des Filtermaterials verhindert werden.

Fig. 6 zeigt eine Schnittdarstellung eines alternativen Ausführungsbeispiels für miteinander verbundene Endabschnitte bzw. Endkanten eines Filtermaterialbogens. Dabei sind mehrlagige Filtermedien dargestellt. Die Fig. 6 zeigt dabei lediglich die durch die Ummantelung 5 miteinander verbundenen Endabschnitte mit Endkanten im Querschnitt.

Dabei hat der zu einem Endlosbalg geformte Filtermaterialbogen zwei Lagen 2A, 2B aus einem Filtervliesmaterial. Zwischen den Lagen 2A, 2B sind beispielsweise Aktivkohlepartikel 19 gestreut, die als Absorber dienen. Die Ummantelung 5 ist aus gespritztem Kunststoffmaterial gebildet.

Aus Fig. 6 ist zu erkennen, dass die Endkanten 4A, 4B des Filtermaterialbogens 2A, 2B von der Ummantelung 5 verschlossen ist. Das heißt insbesondere, dass die Aktivkohlepartikel 19 nicht herausrieseln können.

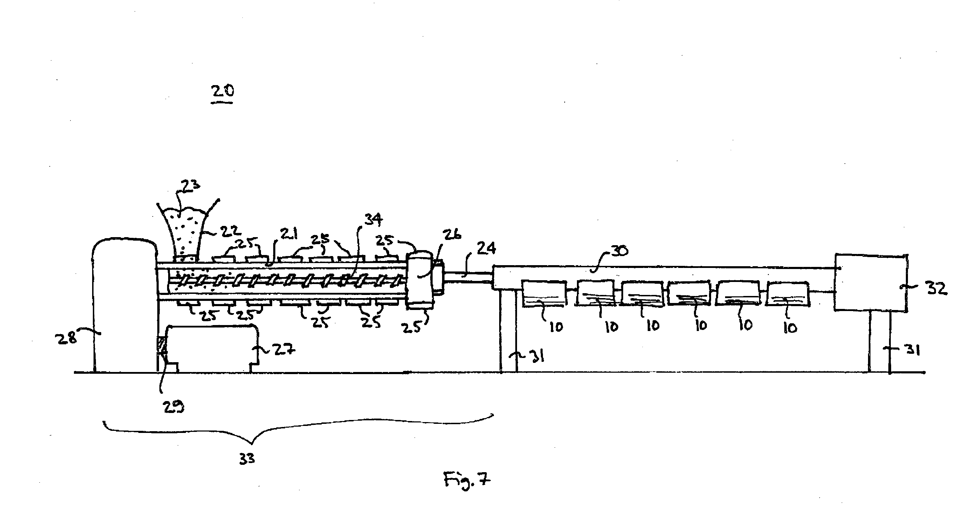

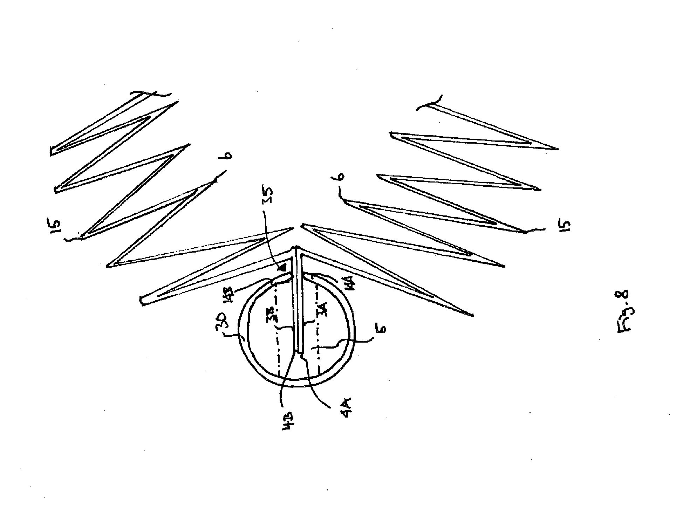

Die Figuren 7 und 8 zeigen eine Anordnung, um eine alternative Variante des Herstellungsverfahrens für ein Filterelement durchzuführen. Die Herstellungsanordnung 20, wie sie in Fig. 7 dargestellt ist, weist eine Extrudereinrichtung 33 auf, die dazu dient, flüssiges Kunststoffmaterial bereitzustellen. Dazu ist ein Zylinder 21 mit Heizelementen 25 versehen, wobei im Inneren des Extrudierzylinders oder Extrudierrohres 21 eine Vortriebsschnecke 34 vorgesehen ist. Die Vortriebsschnecke 34 dient dazu, granulares Kunststoffmaterial 23, welches über einen Trichter 22 in den Innenraum des Zylinders 21 eingefüllt werden kann, in der Orientierung der Fig. 7 nach rechts zu fördern. Gleichzeitig erfolgt ein Verschmelzen der granularen Kunststoffkörper bzw. des Kunststoffgranulats durch die Heizelemente 25.

Der Antrieb der Förderschnecke 34 erfolgt über einen Motor 27, der über eine Welle 29 an ein Untersetzungsgetriebe 28 gekoppelt ist. An einem Ende des Zylinders 21 ist ein Werkzeug 26, das ebenfalls beheizt ist, gekoppelt. Durch das Fördern und Erhitzen des Kunststoffgranulates 23 liegt in dem Werkzeug 26 flüssiges Kunststoffmaterial für eine Ummantelung von aneinander liegenden Endabschnitten bereit.

Um die Endabschnitte, beispielsweise in der Art wie in Fig. 5 dargestellt ist, mit einer Presskante zusammenzuhalten, wird bei der Anordnung der Fig. 7 ein geschlitztes Rohr 30 eingesetzt. Das längs geschlitzte Rohr 30 dient dazu, die Endkanten bzw. Endabschnitte des Filtermaterials zusammenzuhalten und gleichzeitig als Form oder Werkzeug für die Kunststoffummantelung.

In Fig. 8 ist das Rohr 30 im Querschnitt dargestellt. Das Rohr 30 hat einen Schlitz, in den Endfaltenabschnitte 3A und 3B des Filtermaterials eingespannt sind. Durch die Rohrform drücken die beiden Rohrabschnitte 14A, 14B klammerartig die beiden Filtermateriallagen 3A, 3B aufeinander. Innerhalb des Rohres kann ferner, wie es durch die gestrichpunkteten Linien angedeutet ist, ein Profil ausgebildet werden.

Das zickzackförmig gefaltete oder plissierte Filtermaterial kann in den Rohrschlitz 35 eingeführt werden (vgl. Fig. 7). Anschließend wird in den Innenraum des Rohres 30 das flüssige Kunststoffmaterial eingeführt. Nach dem Erkalten ergibt sich um die Endkanten 4A, 4B und Teile der Endabschnitte 3A, 3B eine Kunststoffummantelung 5.

Es sind dabei mehrere Filterelemente 10 in den Rohrschlitz 35 eingespannt bzw. mit der Kunststoffummantelung 5 versehen. Die mehreren Filterelemente 10 können in der Orientierung der Fig. 7 nach rechts über eine Schneideeinrichtung 32 voneinander getrennt werden. In Fig. 7 lagert das Extrusionsrohr 30 und die Schneideeinrichtung 32 auf Stützen 31.

Das geschlitzte Rohr kann innenseitig mit einer Beschichtung versehen sein, um ein Anhaften des flüssigen Kunststoffes zu reduzieren. Darüber hinaus kann das Rohr innenseitig mit beliebigen Profilen versehen sein, um beispielsweise gewünschte Geometrien für die Ummantelung zu realisieren.

Die vorgeschlagenen Maßnahmen zum Verschließen von Endabschnitten bzw. Herstellungsverfahren von Filterelementen und Filtereinrichtungen führen zu einer besonderen Dichtheit dieser Balgnahtverbindung bzw. der Verbindung der Endabschnitte. Darüber hinaus ergibt sicht eine verbesserte Optik, da keine weiteren Hilfsmittel, wie Klemmen oder Klebstoffe zum Einsatz kommen müssen. Ferner wird insbesondere bei der Filterherstellung in der Regel kein zusätzlicher weiterer Werkstoff bei der benötigt, so dass die Verarbeitung besonders kostengünstig erfolgen kann. Durch die Verwendung von Kunststoffmaterial als Ummantelung, wie es beispielsweise in den Deckeln oder Endscheiben der Filtereinrichtung verwendet wird, ist auch die Entsorgung entsprechender Filter besonders einfach und kostengünstig möglich.

## Patentansprüche

1. Verfahren zum Herstellen eines Filterelements (1), umfassend: Umspritzen von oder Anextrudieren an gegenüberliegenden Endkanten (4A, 4B) von Endabschnitten (3A, 3B) eines Filtermaterialbogens (2) mit oder von einer Kunststoffummantelung (5) zum Ausbilden eines Endlosbalgs.

2. Verfahren nach Anspruch 1, wobei die Endabschnitte (3A, 3B) flächig aufeinander gelegt werden.

3. Verfahren nach Anspruch 1 oder 2, wobei der Filtermaterialbogen (2) mehrfach zickzackförmig parallel zu den Endkanten (4a, 4B) gefaltet wird.

4. Verfahren nach einem der Ansprüche 1 bis 3, wobei die Endkanten (4A, 4B) vollständig entlang ihrer gesamten Länge (L) umspritzt werden.

5. Verfahren nach einem der Ansprüche 1 bis 4, wobei das Umspritzen mittels eines Spritzgussverfahrens erfolgt.

6. Verfahren nach einem der Ansprüche 1 bis 5, wobei die Endabschnitte (3A, 3B) während des Umspritzens gegeneinander gedrückt werden.

7. Verfahren nach Anspruch 6, wobei das Gegeneinanderdrücken durch ein Spritzgusswerkzeug oder eine separate Presse (7A, 7B) erfolgt.

## Claims

1. Method for manufacturing a filter element (1), comprising: Overmolding of or in situ extruding on end portions (3A, 3B) of a filter material sheet (2) at opposing end edges (4A, 4B) with or from plastic casing (5) for forming an endless bellows.

2. Method according to claim 1, wherein the end portions (3A, 3B) are placed on top of each other in a flat design.

3. Method according to claim 1 or 2, wherein the filter material sheet (2) is zigzag folded multiple times parallel to the end edges (4A, 4B).

4. Method according to one of the claims 1 to 3, wherein the end edges (4A, 4B) are completely overmolded along their whole length (L).

5. Method according to one of the claims 1 to 4, wherein the overmolding is realized by means of an injection molding process.

6. Method according to one of the claims 1 to 5, wherein the end portions (3A, 3B) are pressed against each other during the overmolding process.

7. Method according to claim 6, wherein pressing the end portions against each other is realized by means of an injection mold or a separate press (7A, 7B).

## Revendications

1. Procédé de fabrication d'un élément filtrant (1), comprenant : enrobage de / extrusion sur des bords d'extrémité (4A, 4B) opposés de sections d'extrémité (3A, 3B) d'une feuille de matériau filtrant (2) avec ou d'enveloppe en plastique (5) en vue de former un soufflet continu.

2. Procédé selon la revendication 1, les sections d'extrémité (3A, 3B) étant posées à plat l'une sur l'autre.

3. Procédé selon la revendication 1 ou 2, la feuille de matériau filtrant (2) étant pliée plusieurs fois en accordéon de manière parallèle aux bords d'extrémité (4A, 4B).

4. Procédé selon l'une des revendications 1 à 3, les bords d'extrémité (4A, 4B) étant entièrement enrobés sur toute leur longueur (L).

5. Procédé selon l'une des revendications 1 à 4, l'enrobage étant effectué selon un procédé de moulage par injection.

6. Procédé selon l'une des revendications 1 à 5, les sections d'extrémité (3A, 3B) étant pressées l'une contre l'autre durant l'enrobage.

7. Procédé selon la revendication 6, le pressage des sections l'une contre l'autre étant effectué par un outil de moulage par injection ou une presse séparée (7A, 7B).
